Europäisches Patentamt

European Patent Office

Office européen des brevets

(11) Veröffentlichungsnummer: **0 614 304 A1**

(12)     **EUROPÄISCHE PATENTANMELDUNG**

(21) Anmeldenummer: **94102020.8**

(22) Anmeldetag: **10.02.94**

(51) Int. Cl.5: **H04M 9/08**, H04M 9/10

(30) Priorität: **20.02.93 DE 4305256**

(43) Veröffentlichungstag der Anmeldung:
**07.09.94 Patentblatt 94/36**

(84) Benannte Vertragsstaaten:
**AT BE CH DE ES FR GB IT LI NL SE**

(71) Anmelder: **Alcatel SEL Aktiengesellschaft
Lorenzstrasse 10
D-70435 Stuttgart (DE)**

(72) Erfinder: **Walker, Michael
Ringstrasse 35
D-73666 Baltmannsweiler (DE)**
Erfinder: **Heitkämper, Peter
Kirchplatz 3
D-64846 Gross-Zimmern (DE)**

(74) Vertreter: **Müller, Joachim et al
Alcatel SEL AG,
Patent- und Lizenzwesen,
Postfach 300 929
D-70449 Stuttgart (DE)**

(54) **Verfahren zum Verbessern der akustischen Rückhördämpfung von elektroakustischen Anlagen.**

(57) Zur Verbesserung der Rückhördämpfung von elektroakustischen Anlagen, insbesondere zum Verbessern der Freisprecheigenschaften eines Telekommunikations-Endgerätes, mit Kompandersteuerung mittels einer dem Kompander (4) zugeordneten Echoauswerteschaltung (52) wird dem Kompander (4) ein Echokompensator (40) vorgeschaltet oder/und dem Kompander (4) eine sprachgesteuerte Waage (51) nachgeschaltet, die von der Echoauswerteschaltung (52) des Kompanders (4) angesteuert werden. Zur Steuerung des Echokompensators (40) oder/und der sprachgesteuerten Waage (51) können die üblicherweise für deren Funktion erforderlichen Steuermittel entfallen. Man erhält ein besonders wirksames wirtschaftliches Verfahren mit sehr guten Freisprecheigenschaften.

Fig.2

EP 0 614 304 A1

Die vorliegende Erfindung bezieht sich auf ein Verfahren zum Verbessern der akustischen Rückhördämpfung von elektroakustischen Anlagen gemäß dem Oberbegriff des Anspruchs 1.

Ein derartiges Verfahren ist aus der DE-A 37 24 346 bekannt. Durch den Kompander werden die vom Mikrophon gelieferten Signale, im folgenden Sendesignale genannt, soweit sie über einem Sollwert liegen, auf einen einheitlichen Signalpegel komprimiert, soweit sie den Sollwert aufweisen, maximal verstärkt, und soweit sie unter dem Sollwert liegen, expandiert. Die Kompander-Kennlinie LU2 = f(LU1) besitzt einen steilen Expansionsbereich und einen flachen Kompressionsbereich. Durch Rückführung der Ausgangssignale über einen Tiefpaß oder ein Bandfilter zum Eingang des Kompanders kann die Kennlinie verschoben und gegebenenfalls auch die Kennliniensteilheit im Expanderbereich verändert werden. Außerdem kann die Kennlinienverschiebung in Abhängigkeit von der Lautstärkeeinstellung im Empfangszweig bewirkt werden. Die Systemparameter werden in der Regel herstellerseitig auf übliche, akustische Umgebungsverhältnisse in einem Büroraum eingestellt. Liegen davon abweichende Verhältnisse vor, z.B. sehr hoher Geräuschpegel, so muß ein manueller Abgleich vorgenommen werden, da beim Ansteigen der Umgebungsgeräusche über den Einsatzpunkt der Expansion diese mit erhöhter Verstärkung übertragen werden.

Bei derartigen elektroakustischen Anlagen, beispielsweise einem Telefon mit Freisprecheinrichtung, ist die akustische Rückhördämpfung von der Anordnung der Richtwirkung der Schallwandler im Gerät, von der Empfindlichkeit des verwendeten Mikrophons und der eingestellten Wiedergabelautstärke abhängig. Bei dem bekannten Kompanderverfahren ist auch eine vom Empfangssignal abhängige Kennlinienverschiebung möglich. Dabei kann der Expanderbereich so verschoben werden, daß das vom Lautsprecher abgestrahlte und am Mikrophon empfangene Signal immer sicher unterdrückt wird, wenn eine entsprechende, endgeräteseitige Einstellung vorgenommen, d.h. herstellerseitig durchgeführt wird.

Bei Anwendung derartiger bekannter, standardisierter Schaltungen für unterschiedlich aufgebaute Endgeräte mit z.B. voneinander abweichender Rückhördämpfung sowohl über das Gehäuse als auch die Luftstrecke, Lautsprecher-Mikrophon und/oder der Verwendung von Lautsprechern und/oder Mikrophonen mit unterschiedlichen Wirkungsgraden oder bei Verwendung derselben in akustisch stark voneinander abweichenden Räumen kann es vorkommen, daß eine mögliche manuelle Einstellung der Rückhördämpfung nicht mehr ausreicht, um eine gute Sprachverständigung beim Freisprechen zu gewährleisten.

Es wurde daher bereits vorgeschlagen (P 42 29 910 der Anmelderin), den Kompander zusätzlich in Abhängigkeit vom Sendesignal und vom Empfangssignal zu steuern, indem jeweils der Sprachpegel der beiden Signale ermittelt und gewichtet wird und der aus beiden abgeleitete Vergleichswert zusammen mit dem Betrag des Empfangssignals zur Kennliniensteuerung verwendet wird. Dadurch wird eine sich auf die Gegebenheiten der Umgebung und des Endgerätes einstellende, also adaptive Rückhördämpfung erreicht. Es ist daher keine manuelle Einstellung und Anpassung mehr notwendig. Diese Schaltung wirkt bezüglich der Rückhördämpfung als automatische Echodämpfung, nachfolgend mit AERL bezeichnet.

Bei ungünstiger Mikrophon-Lautsprecheranordnung, insbesondere bei kleinen Endgeräten, ist die Freisprechqualität trotz AERL-Steuerung nicht in allen Fällen gewährleistet.

Es ist daher Aufgabe der Erfindung, ein Verfahren anzugeben, um bei Kompandern mit AERL-Steuerung eine bessere Entkopplung zwischen Lautsprecher und Mikrophon mit möglichst geringem Kosten- und Materialaufwand vornehmen zu können.

Gelöst wird diese Aufgabe durch die im Anspruch 1 angegebenen Merkmale. Da für die Ansteuerung des Echokompensators und/oder der sprachgesteuerten Waage die Steuersignale der im Kompander bereits vorhandenen Echoauswerteschaltung herangezogen werden, wird der Aufbau des Echokompensators bzw. der sprachgesteuerten Waage stark vereinfacht, so daß mit geringem Kostenaufwand eine zusätzliche Erhöhung der Rückhördämpfung möglich ist. Da es sich in der Regel um Nahbereichechos oder Kurzzeitechos handelt, kann die Echounterdrückung durch adaptive Digitalfilter mit kurzer Filterlänge besonders günstig durchgeführt werden.

Weitere vorteilhafte Einzelheiten der Erfindung sind in den Unteransprüchen angegeben und nachfolgend anhand der in der Zeichnung dargestellten Ausführungsbeispiele beschrieben. Es zeigen:

Fig. 1     ein Blockschaltbild einer Kompandersteuerung mit adaptiver Rückhördämpfung und Echokompensator,

Fig. 2     ein vereinfachtes Blockschaltbild einer Anordnung gemäß Fig. 1 mit einer nachgeschalteten sprachgesteuerten Waage,

Fig. 3     ein Blockschaltbild entsprechend der Fig. 1, jedoch mit digitaler Auswertung und Steuerung und

Fig. 4     ein Funktionsschema eines adaptiven FIR-Filters.

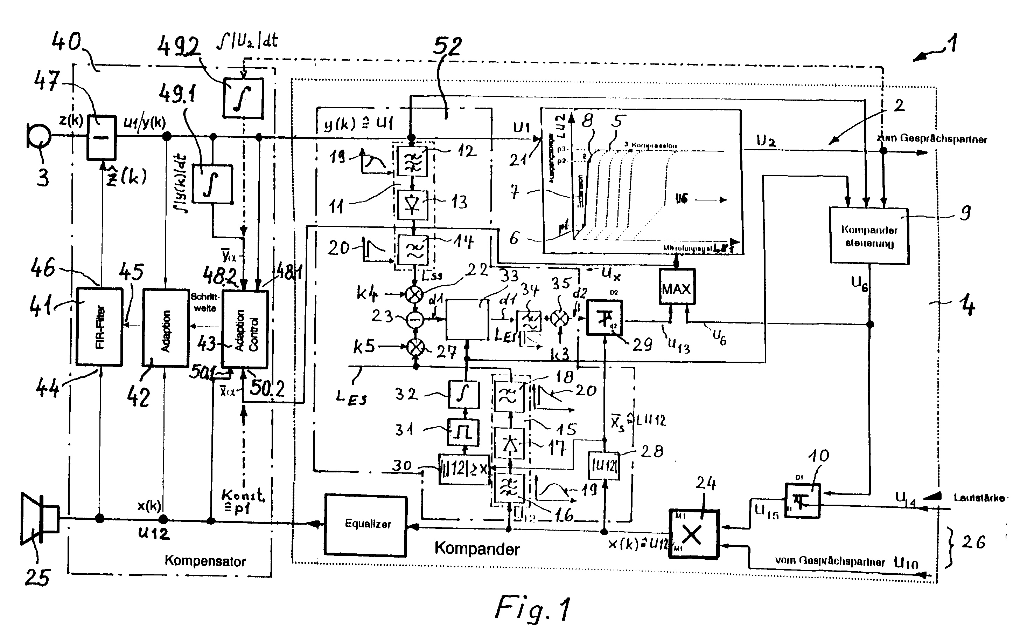

In Fig. 1 ist mit 1 eine elektroakustische Anlage in Form eines Telekommunikations-Endgerätes bezeichnet. Es besitzt einen Sendezweig 2 mit einem Mikrophon 3 und einem als Block dargestellten Kompander 4. Letzterer besitzt die aus der DE-A 37 24 346 bekannten Eigenschaften und im einzelnen nicht dargestellte Grundschaltungen wie Verstärker, Komparator, Kompressor und Expander sowie die zugehörigen Steuermittel etc.. Der Kompander besitzt eine charakteristische Kennlinie 5, LU2 = f(LU1), wobei LU1 das vom Mikrophon gelieferte Sendesignal und U2 das vom Kompander an die Übertragungsleitung ausgegebene, modifizierte Sendesignal ist. Die Kennlinie 5 besitzt einen Anfangsbereich 6 unterhalb des Einsatzpunktes p1, in dem akustische Signale mit geringem Pegel stark interdrückt werden. Vom Punkt p1 bis p2 erstreckt sich der Expansionsbereich 7, der ab p2 bis p3 in den Kompressionsbereich 8 übergeht und anschließend nahezu waagerecht verläuft. Im steilen, schmalen Expansionsbereich 7 werden über dem Pegel p1 liegende Signale verstärkt, im Punkt p2 maximal verstärkt und ab dem Punkt p3 komprimiert, so daß ab p3 ein einheitlicher Sendepegel erhalten wird. Die Kennliniensteuerung durch Verschieben der Kennlinie nach rechts - angedeutet durch das gestrichelte Kennlinienfeld - erfolgt über die Kompandersteuerung 9, über die auch z.B. bei erhöhter Dämpfung über ein steuerbares Dämpfungsglied 10 die Empfangslautstärke angehoben werden kann.

Zur Erzeugung der adaptiven Rückhördämpfung ist ein Sprachdetektor 11 vorgesehen, der ein Bandfilter 12, einen Gleichrichter 13 und einen ausgangsseitigen Tiefpaß 14 aufweist. Dem Sprachdetektor wird das Sendesignal U1 zugeführt. Weiterhin ist ein Sprachdetektor 15 mit einem Bandfilter 16, Gleichrichter 17 und Tiefpaß 18 vorgesehen, dem das Empfangssignal U12 zugeführt wird. Die Bandfilter 12, 16 sind vorzugsweise so ausgelegt, daß sie die im Sprachfrequenzspektrum am stärksten auftretenden Frequenzen bevorzugen. Dies ist durch die die Filtercharakteristik darstellenden Kurven 19 veranschaulicht.

Die Tiefpässe 14 und 18 sind so ausgelegt, daß sie eine steile Anstiegsflanke, also eine kurze Anstiegszeit z.B. 5 ms bis 20 ms, insbesondere etwa 10 ms und eine langsam fallende Abfallflanke und somit lange Abfallzeit von z.B. 30 ms bis 100 ms, insbesondere etwa 65 ms besitzen, wie durch die Kurven 20 angedeutet.

Das zum Sprachdetektor 11 geleitete Sendesignal U1 wird zwischen Mikrophon 3 und Eingang 21 des Kompanders 4 abgegriffen und durch den Sprachdetektor 11 ein dem Spitzenwert des Sprachsignals entsprechender Sprachpegel $L_{ss}$ über einen Multiplizierer 22 einem Detektor 23, z.B. einen Differenzwert- und Schwellenwertdetektor, zugeführt.

Das Empfangssignal U12 wird zwischen einem Lautstärkesteller 24 und einem Lautsprecher 25 des Empfangszweiges 26 abgegriffen und dem Sprachdetektor 15 zugeführt. Von diesem wird ein Empfangspegel $L_{ES}$ ausgegeben und über einen Multiplizierer 27 an den Differenz- und Schwellenwertdetektor 23 angelegt. Der Empfangspegel $L_{ES}$ kann über den Multiplizierer 27 mit einem Gewichtungsfaktor k5 und der Sendepegel $L_{ss}$ über den Multiplizierer 22 bei Bedarf mit einem Gewichtungsfaktor k4 gewichtet werden, so daß der Wert des Sendepegels und der Wert des Empfangspegels aneinander angepaßt werden können.

Das zwischen Lautstärkesteller 24 und Lautsprecher 25 abgreifbare Empfangssignal U12 wird einem Funktionsblock 28 zugeführt, der den Betrag |U12| des Empfangssignals generiert und einem steuerbaren Dämpfungsglied 29 zuleitet, dessen Ausgang ein Steuersignal U13 zur Kennliniensteuerung in Papierebene nach rechts ausgibt. Außerdem wird der Betrag |U12| des Empfangssignals U12 über einen Schwellenwertdetektor 30 unmittelbar oder über einen Pulsformer 31 und einen Integrator 32 an eine Schalteinrichtung 33 angelegt.

Der Schalteinrichtung 33 wird auch der vom Detektor 23 ausgegebene Vergleichswert d1 zugeführt, der in Abhängigkeit von einem vom Integrator 32 ankommenden Steuersignal unmittelbar oder zweckmäßig über einen Tiefpaß 34 und einen Multiplizierer 35 dem Dämpfungsglied 29 zugeleitet wird.

Der Tiefpaß 34 ist so ausgelegt, daß er eine lange Abfallzeit, z.B. etwa 200 ms bis 5 s, und eine kurze Anstiegszeit, z.B. etwa 1 ms bis 100 ms besitzt. Der Kurzzeitwert kann etwa dem der Tiefpässe 14, 18 entsprechen oder ist vorzugsweise kürzer und sein Langzeitwert ist länger als derjenige der Tiefpässe 14, 18. Durch den Multiplizierer 35 kann der Vergleichswert d2 mit einem Gewichtungsfaktor k3 gewichtet und an unterschiedliche Gegebenheiten zur richtigen oder optimalen Kennliniensteuerung angepaßt werden.

Erfindungsgemäß ist dem Kompander 4 ein Echokompensator 40 vorgeschaltet. Dieser besteht vorteilhaft aus einem adaptiven digitalen FIR-Filter 41 mit zugeordnetem Koeffizienten-Adapter 42 und einer die Schrittweite $\alpha$ des Koeffizienten-Adapters 42 steuernden Adaptersteuerung 43. An einem Filtereingang 44 des FIR-Filters 41 liegt das vom Lautsprechereingang abgenommene Empfangssignal x(k) bzw. U12 und an einem zweiten Steuereingang 45 des FIR-Filters 41 liegt das Ausgangssignal des Koeffizienten-Adapters 42. Der Ausgang 46 des FIR-Filters 41 wird einem im Sendezweig nach dem Mikrophon 3 eingeschalteten Subtrahierer 47 eingegeben und vom Sendesignal z(k) abgezogen. Am Kompandereingang 21 liegt dann das gefilterte Sendesignal y(k) bzw. U1.

Einem ersten Steuereingang 48.1 der Adaptersteuerung 43 wird das Sendesignal y(k) direkt und einem zweiten Steuereingang 48.2 das Kompander-Ausgangssignal U2 bzw. das Sendesignal y(k) über eine einen Integrator 49.1 bzw. 49.2 aufweisenden Schaltung abgeleitete Schrittweiten-Adaptionssignal y$\alpha$ zugeführt. An einen dritten Steuereingang 50.1 wird das Empfangssignal x(k) direkt und an einen vierten Steuerein-

EP 0 614 304 A1

gang 50.2 wird das aus dem Empfangssignal x(k) abgeleitete Schrittweiten-Adaptionssignal xα angelegt. Letzteres ist z.B. vom Maximalwertdetektor MAX des Kompanders 4 abgezweigt, oder es wird durch einen z.B. dem Punkt p1 der Kompanderkennlinie 5 entsprechenden konstanten Wert gebildet.

Die Aufgabe der Adaptersteuerung 43 ist, zum einen die Schrittweite α in Abhängigkeit des Fehlers zu steuern. Hierzu dienen die Eingänge 48.1 für y(k) und 50.1 für x(k). Zum andern wird die Schrittweite α in Abhängigkeit von der Lage des zu sendenden Signals in der Kompanderkennlinie 5, also dem Arbeitspunkt auf derselben, bestimmt. Dies kann auf verschiedene Arten durchgeführt werden, von denen einige in der Zeichnung dargestellt und nachfolgend beschrieben sind.

Gemäß der in Fig. 1 mit durchgezogenen Linien dargestellten Ausführung wird das dadurch erreicht, daß der über den Integrator 49.1 gebildete Mikrophonpegel yα mit dem am Steuereingang 50.2 anliegenden Rückhörpegel xα verglichen wird und bei Überschreiten des Kompressions-Einsatzpunktes p2 die Schrittweite α gegen Null gesetzt wird. Alternativ dazu kann gemäß der gestrichelten Linie der Vergleich zwischen dem vom Kompanderausgang über den Integrator 49.2 aus U2 erhaltenen Wert yα und einem konstanten, aus der Kennlinie 5 bekannten Wert p1 oder p2 oder einen zwischen p1 und p2 liegenden Zwischenwert als Entscheidungskriteriums zum Ändern der Schrittweite herangezogen werden. Die Änderung der Schrittweite α kann in einer oder mehreren Stufen oder stufenlos zwischen einem Maximalwert und einem Minimalwert oder Null erfolgen.

Die Wirkungsweise dieser Anordnung ist folgende:

Nach dem Start erfolgt eine Grundeinstellung der Kennlinie entsprechend einem voreingestellten, z.B. auf akustisch ruhige, übliche Büroumgebung angepaßten Grundpegel. Dabei wird vom Schwellenwertdetektor 30 ermittelt, ob ein Betrag |U12| bzw. |x(k)| eines Empfangssignals U12 bzw. x(k) vorliegt, der größer ist als ein vorbestimmter Sollwert x.

Gleichzeitig wird bei vorhandenem Sendesignal U1 bzw. y(k) ein Sprachpegel $L_{ss}$ generiert und mit k4 gewichtet, und vom Empfangssignal U12 bzw. x(k) wird über den Sprachdetektor 15 der Empfangspegel $L_{ES}$ erzeugt. Der Detektor 23 stellt an seinem Ausgang den Vergleichswert d1, z.B. die Differenz von $L_{ss}$ und $L_{ES}$, zur Verfügung.

Falls der Betrag |U12| bzw. |x(k)| des Empfangssignals U12 bzw. x(k) größer ist als der Schwellenwert x, schaltet die Schalteinrichtung 33, z.B. ein Sample-und-Hold-Glied, den Vergleichswert d1 über den Tiefpaß 34 und den Multiplizierer 35 an das steuerbare Dämpfungsglied 29. Dies ist ein Fall, bei dem infolge der ermittelten Werte ein Rückhörsignal auftritt, so daß die Rückhördämpfung angehoben werden muß. Dies geschieht über das steuerbare Dämpfungsglied 29 durch Bereitstellung des Steuersignals U13, das aus dem Betrag |U12| bzw. |x(k)| abgeleitet wird und deren Größe vom Vergleichswert d2 bestimmt wird. Bei vorhandenem Betrag |U12| bzw. |x(k)| wird die Kennlinie 5 in Abhängigkeit von d2 nach rechts in Richtung höherer Dämpfung verschoben. Hierdurch wird eine Echobildung unterdrückt.

Die Verschiebung ist abhängig von der Größe des Empfangssignals, so daß eine automatische adaptive Echodämpfung auftritt. Die links und unterhalb des Kennlinienfeldes dargestellten Schaltungsgruppen bilden daher eine Echoauswerteschaltung 52 zur Steuerung der Rückhördämpfung und daher in gewissem Grad auch zur Echounterdrückung.

Eine zusätzliche Echounterdrückung erfolgt gemäß der Erfindung durch die Ansteuerung der Adaptersteuerung 43 über den Ausgang der Echoauswerteschaltung 52 vom Steuersignal U13 oder hier den Ausgang Ux des Maximalwertdetektors MAX.

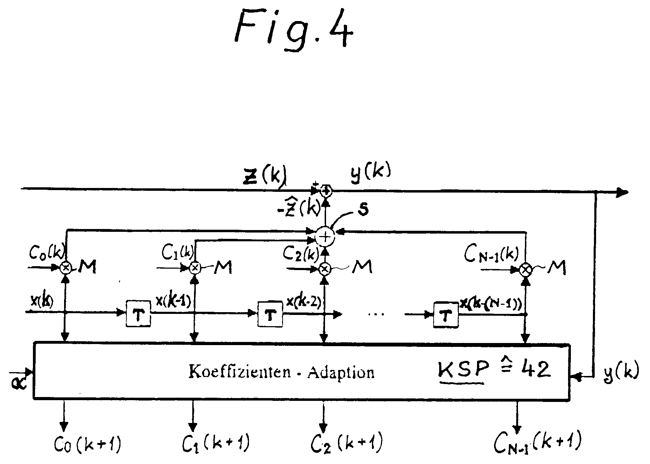

Zur Wirkung der Echounterdrückung durch das adaptive FIR-Filter 41 sei nachfolgend die Wirkungsweise eines solchen Filters anhand der Fig. 4 kurz erläutert:

Ein digitales adaptives FIR-Filter besteht bekanntlich im wesentlichen aus Multiplizierern M, Koeffizientenspeichern KSP und Verzögerungsgliedern oder Abtastwert-Speicher-Gliedern T. Ein Verzögerungsglied T speichert einen Abtastwert und verzögert ihn um eine Abtastperiode. Die Filterlänge N ist gegeben durch die Anzahl der Koeffizienten. Innerhalb einer Abtastperiode werden folgende Berechnungen durchgeführt:

In einem ersten Schritt werden die letzten N Abtastwerte des Empfangssignals x(k) ... x(k-(N-1)) mit den zugehörigen Koeffizienten $C_o(k)$ ... $C_{N-1}(k)$ multipliziert und alle erhaltenen Werte im Summierer S summiert. Das Ausgangssignal -$\hat{z}(k)$ des FIR-Filters im Abtastzeitpunkt n ergibt sich demnach zu

$$\hat{z}(k) = \sum_{i=0}^{N-1} x(n-i) \cdot C(i) \qquad = \text{Schätzwert zur Unterdrückung der Echosignale}$$

In einem zweiten Schritt werden alle Koeffizienten C(i) neu eingestellt. Dies erfolgt nach dem Least Mean Square-Verfahren (LMS-Verfahren) nach der Gleichung

4

$$C(i)_{neu} = C(i)_{alt} + \alpha \bullet y(k) \bullet x(k-i)$$

mit

C(i) = Koeffizienten-Nummer i

x(k-i) = Empfangssignal

y(k) = Fehlersignal (Restecho)

$\alpha$ = Schrittweite

Um die Koeffizienteneinstellung unabhängig vom Empfangspegel zu steuern oder zu regeln, wird die Koeffizienteneinstellung adaptiv nach folgender Formel durchgeführt oder berechnet:

$$C_n(k+1)=C_n(k)+ \frac{\alpha}{\sum\limits_{i=0}^{N-1} x^2(k-i)} y \bullet (k) \bullet x(k-n)$$

Mit $\alpha = 1$ wird die schnellste Koeffizienteneinstellung erreicht und

mit $\alpha = 0$ bleibt die vorherige Einstellung erhalten.

Anschließend wird das Filtersignal $\hat{z}(k)$ vom Referenzsignal, beim Ausführungsbeispiel dem Sendesignal z(k) des Mikrophons 3, abgezogen und so das neue Fehlersignal oder hier das Sendesignal y(k) gebildet.

Die Reaktionsgeschwindigkeit des Systems ist abhängig von der Wahl der Schrittweite $\alpha$. Wird diese klein gewählt, so erfolgt eine stufenweise Annäherung an den Endwert in kleinen Schritten. Die Einstelldauer ist daher entsprechend groß. Bei großer Schrittweite $\alpha$ erfolgt die Annäherung zwar schnell, jedoch ist keine optimale Einstellung erreichbar, wenn die Referenzwerte sich fortlaufend stark ändern, und das System wird anfällig gegen Störungen.

Beim bekannten LMS-Verfahren bzw. LMS-Algorithmus wird die Schrittweite $\alpha$ nicht konstant vorgegeben, sondern in Abhängigkeit von der Größe des möglichen Echosignals eingestellt. Dabei kann die Schrittweite $\alpha$ nach folgender Gleichung berechnet werden:

$$\alpha = \frac{1}{\sum\limits_{i=0}^{N-1} x^2(k-i) \bullet (1+E \bullet Z^2(k)) \bullet E^{-1} \bullet y^2(k)}$$

mit $E \bullet Z^2(k)$ und $E \bullet y^2(k)$ = quadratischer Mittelwert von z(k) bzw. y(k).

Beim normierten LMS-Verfahren oder NLMS-Algorithmus wird zwecks schnellerer Adaption die Schrittweite $\alpha$ entsprechend der Größe des vorhandenen Fehlers y(k) verändert.

Das FIR-Filter dient zur Nachbildung der Übertragungsfunktion, die durch Lautsprecher-Raum bzw. Gehäuse-Mikrophon gegeben ist. Dies wird dadurch erreicht, daß die empfangenen Signale mit den am Mikrophon auftretenden Signalen verglichen werden. Dieser Vergleich darf jedoch nur vorgenommen werden, wenn das Mikrophonsignal nicht vom nahen Sprecher beeinflußt wird. Aus diesem Grund darf die Filtereinstellung während des Auftretens solcher Signale nicht verändert werden. Um dies zu verhindern, wird während derartiger Signalphasen die Schrittweite $\alpha$ zu Null gesetzt.

Bei Kompandersteuerungen mit adaptiver Rückhördämpfung beispielsweise gemäß Fig. 1 sind jeweils bereits an der vorhandenen Echoauswerteschaltung 52, die zur Kompander-Kennliniensteuerung zwecks Einstellung der Rückhördämpfung verwendet wird, Steuersignale abgreifbar, die zur adaptiven Einstellung der Schrittweite $\alpha$ des vorgeschalteten FIR-Filters herangezogen werden.

Beim Ausführungsbeispiel gemäß Fig. 1 ist dies das vom Maximalwertdetektor MAX zur Steuerung der Kennlinie 5 ausgegebene Steuersignal Ux. Es wird als Schrittweitensteuersignal x$\alpha$ an den Steuereingang 50.2 der Adaptersteuerung 43 angelegt und an den Steuereingang 48 der Adaptersteuerung 43 wird das Schrittweitensteuersignal y$\alpha$ eingegeben. Aus den beiden Werten x$\alpha$ und y$\alpha$ wird die Entscheidung getroffen, ob die Schrittweite $\alpha$ berechnet oder geändert, z.B. gegen Null gesetzt werden muß und es wird ein entsprechendes Steuersignal an den Koeffizienten-Adapter 42 ausgegeben und über das FIR-Filter 41 der Kompensationswert z(k) generiert.

Bei der erfindungsgemäßen Anwendung eines adaptiven digitalen FIR-Filters mit einem Kompander, der eine Echoauswerteeinheit aufweist, kann der Rechenaufwand für eine gute Echounterdrückung durch das FIR-Filter im Gegensatz zur bisherigen Anwendung solcher Filter als Echocanceller sehr gering sein. So müssen bei der bisherigen Anwendungsart pro Abtastperiode mehrere tausend Taps, d.h. Abtastwerte, berechnet werden, um eine einigermaßen zufriedenstellende Echodämpfung großer Bandbreite zu erreichen. Demgegenüber ist es beim erfindungsgemäßen Verfahren ausreichend, wenn die Anzahl der Speicherplätze 60 bis 100 oder maximal bis zu etwa 300 beträgt. Der hierfür notwendige Rechenaufwand kann bei einem Kompander mit Steuerung über einen digitalen Signalprozessor von diesem Prozessor übernommen werden, so daß ein adaptives digitales FIR-Filter mit hohem Wirkungsgrad für das angegebene System und Verfahren mit sehr geringem Aufwand realisierbar ist.

Bei einem Ausführungsbeispiel konnten schon mit 100 Speicherplätzen bei einer Abtastfrequenz von 24 kHz Langzeitechos ausreichend unterdrückt werden.

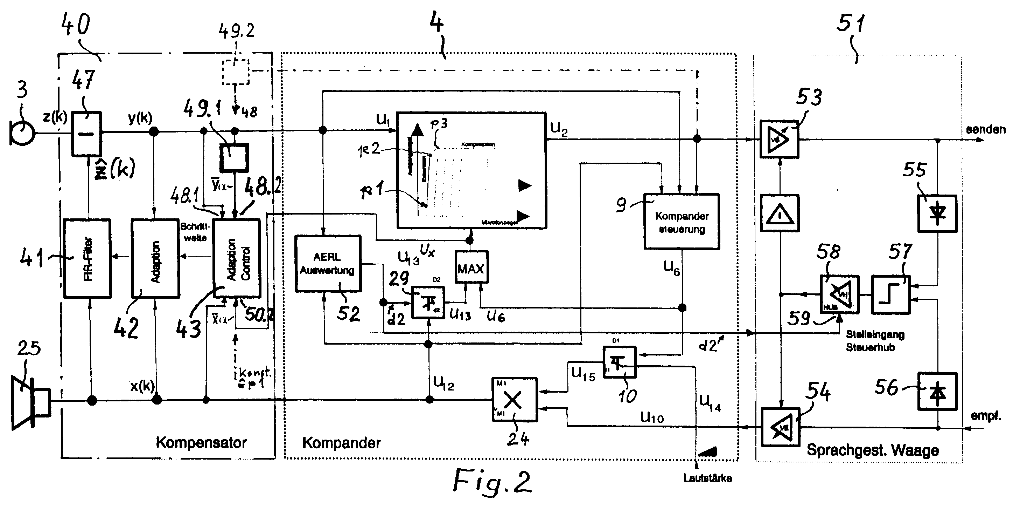

Gemäß einer vorteilhaften Weiterbildung der Erfindung kann dem Kompander 4 mit AERL eine zur Unterdrückung von Langzeitechos an sich bekannte sprachgesteuerte Waage 51 anstelle des vorgeschalteten Echokompensators 40 oder zusätzlich zu diesem nachgeschaltet sein. Die Anforderungen an diese können gering sein, da sie in diesem Fall nur eine zusätzliche Dämpfungsaufgabe übernimmt. Andererseits kann u.U. die Zahl der Speicherplätze des FIR-Filters 41 weiter verringert und der Rechenaufwand weiter gesenkt werden. Eine Schaltung zur Durchführung dieses Verfahrens zeigt das in Fig. 2 dargestellte Blockschaltbild. Die in der Fig. 1 aus den Komponenten 11, 15, 22, 23, 27 und 30 bis 35 gebildete Echoauswerteschaltung ist hier als AERL-Block 52 eingezeichnet.

Die sprachgesteuerte Waage 51 enthält einen Sendeverstärker 53, einen Empfangsverstärker 54, je eine dem Sendezweig bzw. dem Empfangszweig zugeordnete Meßeinrichtung 55 bzw. 56 sowie einen von diesen angesteuerten Schwellwertschalter oder Komparator 57 und einen von diesem gesteuerten Verstärker 58, dessen Steuerhub über einen Steuereingang 59 einstellbar ist. Gemäß der Erfindung wird der Steuerhub der sprachgesteuerten Waage 51 über den Verstärker 58 dadurch adaptiv gesteuert, daß zur Hubsteuerung das an der Echoauswerteschaltung, AERL-Block 52, vorhandene, zur Kompandersteuerung dienende Signal d2 an den Steuereingang 59 angelegt wird. Auf diese Weise kann mit einfachen Maßnahmen eine evtl. noch vorzunehmende Restechodämpfung durchgeführt werden.

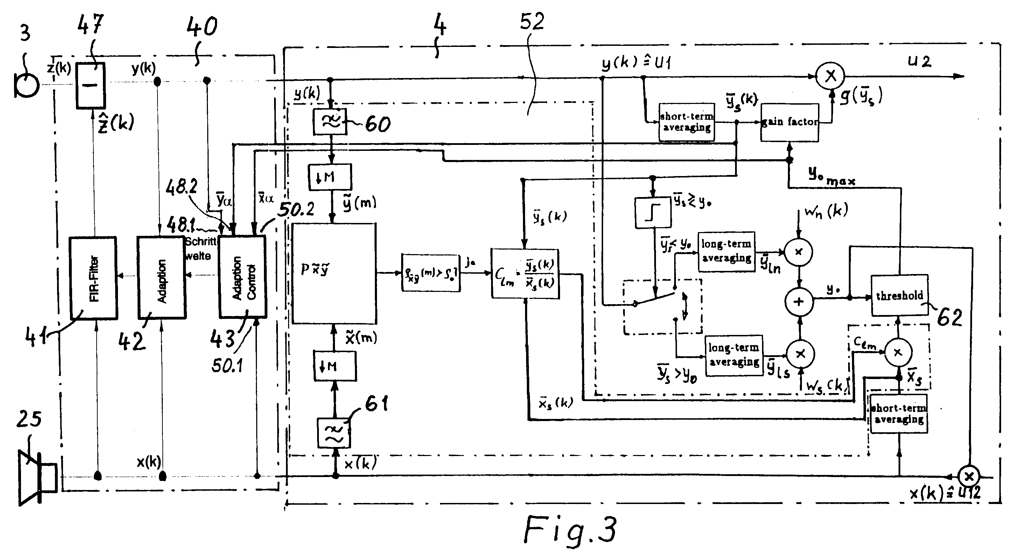

In Fig. 3 ist ein Blockschaltbild für ein Lösungsprinzip dargestellt, bei dem eine digitale Verarbeitung der Signale erfolgt. Natürlich wäre auch eine entsprechende Analoglösung möglich. Hierbei entsprechen die zum Zeitpunkt k abgetasteten Sendesignale $y(k)$ der bisherigen Bezeichnung U1 und die Empfangssignale $x(k)$ der bisherigen Bezeichnung U12. Es sind auch hier Tiefpässe vorhanden, die eine kurze Anstiegszeit und lange Abfallzeit zur Spracherkennung und eine lange Anstiegszeit und kurze Abfallzeit zur Geräuscherkennung aufweisen. Entsprechend ist jeweils ein Kurzzeitbetrags-Mittelwert $y_s$ bzw. $x_s$ des Sende- bzw. Empfangssignals $y(k)$ bzw. $x(k)$ sowie ein Langzeitbetrags-Mittelwert $y_{ln}$ für den Geräuschanteil im Sendesignal $y(k)$ und ein Langzeitbetrags-Mittelwert $y_{ls}$ für den Sprachanteil ermittelbar.

Über diese erfolgt eine sprachgesteuerte Kennlinienverschiebung bzw. Berechnung, indem der Verstärkungsfaktor $g(\overline{y}_s)$ aus dem Wert von $\overline{y}_s$ und dem aus den Langzeitbetrags-Mittelwerten $\overline{y}_{ln}$ und $\overline{y}_{ls}$ gebildeten Sollwert des dem vorbeschriebenen Punkt 2 der Kennlinie 5 entsprechenden Schwellenwert $y_o$ für den Einsatz der Kompression ermittelt oder berechnet wird.

Zur Verbesserung der Rückhördämpfung und Echounterdrückung und zur Anpassung an das akustische System durch Kennliniensteuerung wird ein Lautsprecher-Mikrophon-Kopplungsfaktor $C_{lm}$ aus dem Verhältnis des Kurzzeitbetrags-Mittelwertes des Sendesignals $\overline{Y}_s$ und demjenigen des Empfangssignals $\overline{x}_s$ gebildet und der erhaltene Wert zusätzlich zur Kennliniensteuerung verwendet, indem er mit dem Kurzzeitbetrags-Mittelwert $\overline{x}_s$ des Empfangssignals $x(k)$ multipliziert und zur Kennliniensteuerung bzw. -berechnung herangezogen wird.

Eine Neuberechnung des Lautsprecher-MikrophonKopplungsfaktors $C_{lm}$ erfolgt jeweils dann, wenn im Sendesignal $y(k)$ vom Lautsprecher 25 auf das Mikrophon 3 übergekoppelte starke Empfangssignale auftreten.

Hierzu wird eine Korrelationsmessung durchgeführt. Das Sendesignal $y(k)$ und das Empfangssignal $x(k)$ werden hierzu getrennt über je einen Tiefpaß 60 bzw. 61 geleitet und anschließend von den k Abtastwerten jeweils nur der M-te Abtastwert verwendet, wobei M etwa 5 bis 20, insbesondere 8 sein kann. Es wird so je eine Hüllkurve aus den Werten $\overline{y}(m)$ und $\overline{x}(m)$ gebildet. Aus den einzelnen Werten kann gemäß der Formel

$$\rho \widetilde{\widetilde{xy}}(m) \;=\; \frac{\displaystyle\sum_{n=0}^{N} \widetilde{x}(m-n)\,\widetilde{y}(m-n)}{\displaystyle\sum_{n=0}^{N} \left| \widetilde{x}(m-n)\,\widetilde{y}(m-n) \right|}$$

der Korrelationsfaktor $\rho\widetilde{x}\widetilde{y}(m)$ berechnet werden, der ein Maß für die vom Lautsprecher 25 auf das Mikrophon 3 gekoppelten Signale ist und mit zunehmender Abweichung der Einzelfaktoren voneinander von 1 gegen 0 geht.

Der berechnete Korrelationsfaktor $\rho\widetilde{x}\widetilde{y}(m)$ wird dann mit einem vorgegebenen Sollwert $\rho o$, der z.B. 0,9 betragen kann, verglichen. Bei ausreichend hohem Korrelationsfaktor, d.h. wenn der berechnete größer ist als der Sollwert $\rho o$, wird eine Neuberechnung des Lautsprecher-Mikrophon-Kopplungsgrades $C_{lm}$ durchgeführt und die Kennliniensteuerung dann mit dem neuen Wert vorgenommen bzw. die Kennlinienwerte neu berechnet.

Ein Maximalwertdetektor oder -entscheider 62 bestimmt, ob der Wert $y_o$ oder das Produkt aus $C_{lm}$ und $x_s$ zur Kennliniensteuerung oder -berechnung herangezogen wird.

Die Kurzzeitbetrags-Mittelwerte $y_s(k)$ des Sendesignals $y(k)$ oder $x_s(k)$ des Empfangssignals $x(k)$ können nach folgender Formel berechnet werden:

$$q_s(k) \;=\; (1-a_f)\,|\,q(k)\,| \;+\; a_f q_s(k-1),$$

für fallende Pegel
wenn $|\,q(k)| < q_s(k-1)$
und

$$q_s(k) \;=\; (1-a_r)\,|\,q(k)\,| \;+\; a_r q_s(k-1),$$

für steigende Pegel
wenn $|\,q(k)\,| > q_s(k-1)$ ist
mit

$q =$       $y$ zur Berechnung des Wertes aus dem Sendesignal $y(k)$,
$q =$       $x$ zur Berechnung des Wertes aus dem Empfangssignal $x(k)$,
$a_f =$       Parameter der Zeitkonstante für fallende Pegel und
$a_r =$       Parameter der Zeitkonstante für steigende Pegel.

Bei Realisierung des Kompanders 4 durch einen digitalen Signalprozessor DSP ist die Kennlinie in Form einer Grundkennlinie in einem dem DSP zugeordneten Speicher als Digitalwerte abgespeichert. Die Kennlinienänderung erfolgt z.B. durch mathematische Operationen der gespeicherten Werte mit den berechneten Werten von $C_{lm}$, $y_o$, $y_s$ etc..

Bei dem Kompander 4 mit digitaler Signalverarbeitung ist gemäß der Erfindung ein Echokompensator 40 vorgeschaltet. Die Signale zur Schrittweitensteuerung des FIR-Filters 41 werden hierbei für das Schrittweiten-Adaptionssignal $\overline{y}\alpha$ aus dem Kurzzeitdurchschnittswert $\overline{y}_s(k)$ und das Schrittweiten-Adaptionssignal $\overline{x}\alpha$ vom Ausgangssignal $y_o$ max des Maximalwertdetektors 62 abgeleitet. Auch hier brauchen also keine zusätzlichen Maßnahmen zur Steuerung des FIR-Filters getroffen werden und als FIR-Filter kann ein solches mit kurzer Filterlänge verwendet werden.

Wie anhand der Ausführungen ersichtlich, bietet das erfindungsgemäße Verfahren gegenüber bisherigen bekannten Verfahren den Vorteil, daß ohne zusätzlichen Aufwand für die Filtersteuerung die Abschaltung oder Steuerung der Schrittweite $\alpha$ eines FIR-Filters, das einem Kompander mit AERL-Steuerung vorgeschaltet wird, adaptiv gesteuert werden kann.

Darüber hinaus bietet diese Kombination eine wirtschaftliche optimale adaptive Einstellung auch der übrigen Systemparameter.

Ähnliche Ergebnisse liefert die Kombination eines Kompanders mit AERL-Steuerung und nachgeschalteter sprachgesteuerter Waage, die auch zusätzlich zum Echokompensator angewendet werden kann.

**Patentansprüche**

1. Verfahren zum Verbessern der Übertragungseigenschaften, insbesondere der Rückhördämpfung einer mit einer adaptiven Dynamiksteuerung versehenen elektroakustischen Anlage, die einen Sendezweig mit wenigstens einem Mikrophon und einem Sendeverstärker und einen Empfangszweig mit einem Empfangsverstärker und wenigstens einem Lautsprecher sowie zur adaptiven Dynamiksteuerung einen Kompander mit einer Echoauswerteschaltung aufweist, dessen Einsatzpunkte der Kompression und Expansion in Abhängigkeit von Sende-, Empfangs-, Echo- und Geräuschsignalen dadurch veränderbar sind, daß diese Signale festgestellt und entsprechend deren Pegel Steuersignale erzeugt und zur Kompandersteuerung durch Kennlinienänderung und/oder -verschiebung verwendet werden, insbesondere zum Verbessern der Freisprecheigenschaften eines Telekommunikations-Endgerätes,
   **dadurch gekennzeichnet,** daß dem Kompander (4) zur Erhöhung der Rückhördämpfung ein eingangsseitig am Empfangszweig (26) und ausgangsseitig am Sendezweig (2) liegender, vom Empfangssignal (U12; x(k)) und vom Sendesignal (U1; y(k)) gesteuerter Echokompensator (40) vorgeschaltet wird oder/und eine zwischen Empfangszweig (26) und Sendezweig (2) angeschlossene, von der Echoauswerteschaltung (52) des Kompanders (4) gesteuerte sprachgesteuerte Waage (51) nachgeschaltet wird.

2. Verfahren nach Anspruch 1, dadurch gekennzeichnet, daß als Echokompensator (40) ein adaptives Filter (41), insbesondere ein digitales adaptives Filter verwendet wird, dessen Schrittweite ($\alpha$) in Abhängigkeit vom Empfangssignal (U12; x(k)) derart gesteuert wird, daß sie bei großem Empfangssignal (U12; x(k)) groß und bei nicht vorhandenem oder sehr kleinem Empfangssignal klein oder zu Null gesetzt wird.

3. Verfahren nach Anspruch 2, dadurch gekennzeichnet, daß die Schrittweite ($\alpha$) einerseits von einem vom Sendezweig (2) abgeleiteten Signalpegel (U1; U2; y(k); $y_s(k)$) und andererseits von einem von der Echoauswerteschaltung (52) abgeleiteten Signalpegel ($U_x$; $y_{o\,max}$) gesteuert wird.

4. Verfahren nach Anspruch 2 oder 3, dadurch gekennzeichnet, daß die Schrittweite ($\alpha$) in einer oder mehreren Stufen von einem großen (maximalen) Wert auf einen kleinen Wert bzw. auf Null geschaltet wird.

5. Verfahren nach Anspruch 2 oder 3, dadurch gekennzeichnet, daß die Schrittweite ($\alpha$) so gesteuert wird, daß sie mit zunehmendem Empfangssignal (U12; x(k)) überproportional zunimmt und bei abnehmendem Empfangssignal überproportional abnimmt.

6. Verfahren nach einem der Ansprüche 2 bis 5, dadurch gekennzeichnet, daß dem Filter (41) die Schrittweitensteuersignale ($x\alpha$; $y\alpha$) über einen Mittelwertbildner (49.1; 49.2) zugeführt werden.

7. Verfahren nach Anspruch 1 oder 2, dadurch gekennzeichnet, daß für das eine Schrittweitensteuersignal ($x\alpha$) ein konstanter oder im wesentlichen konstanter Signalpegel verwendet wird, der so bemessen ist, daß er einem Kennliniensteuerwert ($U_x$, $y_{o\,max}$) der durch die Gesamtschaltung vorgegebenen Kennlinie (5) des Kompanders (4) entspricht, der zwischen einem Wert, der einen Einsatzpunkt (p1) der Expansion festlegt, und einem Wert, der einen Einsatzpunkt (p2) der Kompression festlegt, liegt.

8. Verfahren nach einem der Ansprüche 2 bis 6, dadurch gekennzeichnet, daß eine Schrittweitensteuerung nur dann erfolgt, wenn das die Informationen des Empfangssignals (U12; x(k)) enthaltende Schrittweitensteuersignal ($x\alpha$) gleich oder größer ist als das die Informationen des Sendesignals (U1; U2; y(k), $y_s$(k)) enthaltende Schrittweitensteuersignal ($y\alpha$).

9. Verfahren nach einem der Ansprüche 2 bis 8, dadurch gekennzeichnet, daß ein Kompander (4) mit einem vom Sendezweigeingangssignal (U1; y(k)) und/oder vom Sendezweigausgangssignal (U2; U6) sowie von der Echoauswerteschaltung (52) angesteuerten Maximalwertdetektor (MAX; 62) verwendet wird und die Schrittwei0e ($\alpha$) des Filters (41) vom Ausgangssignal ($U_x$; $y_{o\,max}$) des Maximalwertdetektors (MAX; 62) gesteuert wird.

10. Verfahren nach einem der Ansprüche 1 bis 9, dadurch gekennzeichnet, daß bei Verwendung einer nachgeschalteten sprachgesteuerten Waage (51) der Steuerbereich derselben in Abhängigkeit vom Ausgangssignal (d2; $U_x$) der Echoauswerteschaltung (52) eingestellt wird.

Fig. 1

Fig.2

EP 0 614 304 A1

Fig.3

EP 0 614 304 A1

# Fig.4

| Europäisches Patentamt | EUROPÄISCHER RECHERCHENBERICHT | Nummer der Anmeldung EP 94 10 2020 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| Y<br>A | EP-A-0 413 641 (ETAT FRANCAIS)<br>* das ganze Dokument *<br>--- | 1-4<br>5-10 | H04M9/08<br>H04M9/10 |
| D,Y<br>A | DE-A-37 24 346 (STANDARD ELEKTRIK LORENZ AG)<br>* Zusammenfassung *<br>--- | 1-4<br>5-10 | |
| A | EP-A-0 482 745 (ADVANCED MICRO DEVICES INC.)<br>* Zusammenfassung *<br>--- | 1-10 | |
| A | PROCEEDINGS OF EUSIPCO-88  FOURTH EUROPEAN SIGNAL PROCESSING CONFERENCE 5. September 1988 , GRENOBLE, FRANCE<br>Seiten 495 - 498 XP92389<br>W. ARMBRÜSTER 'High Quality Hands-Free Telephony using Voice Switching Optimized with Echo Cancellation'<br>* Absatz 4 *<br>----- | | |

**RECHERCHIERTE SACHGEBIETE (Int.Cl.5)**

H04M
H04R

Der vorliegende Recherchenbericht wurde für alle Patentansprüche erstellt

| Recherchenort | Abschlußdatum der Recherche | Prüfer |
|---|---|---|
| DEN HAAG | 28. April 1994 | Montalbano, F |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
............................................................
& : Mitglied der gleichen Patentfamilie, übereinstimmendes Dokument

EPO FORM 1503 03.82 (P04C03)